# EUROPEAN PATENT APPLICATION

(11) **EP 4 598 156 A1**
(43) Date of publication of application: **06.08.2025**
(21) Application number: 22959784.4
(22) Date of filing: 26.09.2022
(51) Int. Cl.: H04W 56/00

(54) **NON-TERRESTRIAL NETWORK COMMUNICATION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/121506
(87) International publication number: WO 2024/065132

(57) **Abstract**

The present disclosure relates to the technical field of mobile communications, and provides a non-terrestrial network (NTN) communication method and apparatus, a communication device and a storage medium. The method comprises: receiving, by a UE, an NTN system message sent by a network device, and when a preset condition is satisfied, determining that uplink synchronization is recovered, wherein the preset condition is when the UE applies the NTN system message, or when the UE receives the NTN system message, or when the UE starts a synchronization validity timer. The present disclosure solves the problem in the related technology or the occasion when an RRC layer of the UE indicates to a lower layer that the uplink synchronization has been recovered under the condition that a validation moment in the system message pints to a future moment.

## Description

### FIELD

The present disclosure relates to the field of mobile communication technology, in particular to a non-terrestrial network (NTN) communication method, an NTN communication apparatus, a communication device and a storage medium.

### BACKGROUND

NTN communication is an important technology introduced in a fifth generation (5G) mobile communication technology, in which radio resources are provided via a satellite or an unmanned aerial vehicle, rather than a ground base station. However, in a new radio (NR) NTN, it is currently speculated in a protocol that, upon the receipt of a system message, a user equipment (UE), notifies a media access control (MAC) layer that uplink synchronization has been recovered. Currently, there is no scheme about an indication opportunity in a case that an effective time point of the system message is a future time point.

### SUMMARY

An object of the present disclosure is to provide an NTN communication method, an NTN communication apparatus, a communication device and a storage medium, so as to solve the problem about the indication opportunity in the related art.

In a first aspect, the present disclosure provides in some embodiments an NTN communication method, performed by a UE, including: receiving an NTN system message sent by a network device, and determining that uplink synchronization has been recovered in a case that a predetermined condition is met. The predetermined condition includes at least one of: that the UE uses the NTN system message; that the UE has received the NTN system message; or that the UE starts a synchronization validity timer.

In some embodiments of the present disclosure, the NTN system message includes satellite auxiliary information and/or timing advance (TA) information, and the UE using the NTN system message includes using at least part of information in the NTN system message.

In some embodiments of the present disclosure, determining that the uplink synchronization has been recovered in a case that the UE has received the NTN system message includes: in a case that an effective time point of the NTN system message is a time point after the UE has received the NTN system message and the UE supports to use the NTN system message in advance, determining that the uplink synchronization has been recovered in a case that the UE has received the NTN system message.

In some embodiments of the present disclosure, in a case that the effective time point of the NTN system message is a time point after the UE has received the NTN system message and the UE supports to use the NTN system message in advance, the UE using the NTN system message includes at least one of: determining satellite auxiliary information to be used between a current time point and the effective time point based on the satellite auxiliary information in the NTN system message, and using the satellite auxiliary information to be used between the current time point and the effective time point; determining TA information to be used between the current time point and the effective time point based on the TA information in the NTN system message, and using the TA information to be used between the current time point and the effective time point; or using the satellite auxiliary information and/or the TA information in the NTN system message.

In some embodiments of the present disclosure, in a case that the effective time point of the NTN system message is a time point after the UE has received the NTN system message and the UE supports to use the NTN system message in advance, the UE using the NTN system message includes: using the NTN system message before the effective time point, or using the NTN system message at the effective time point.

In some embodiments of the present disclosure, determining that the uplink synchronization has been recovered in a case that the UE starts the synchronization validity timer includes: in a case that the effective time point of the NTN system message is a time point after the UE has received the NTN system message and the UE does not support to use the NTN system message in advance, determining that the uplink synchronization has been recovered in a case that the UE starts the synchronization validity timer.

In some embodiments of the present disclosure, the NTN communication method further includes: sending capability information to the network device, the capability information indicates whether or not the UE supports to use the NTN system message in advance, and the capability information is used to assist the network device to configure a parameter in the NTN system message.

In a second aspect, the present disclosure provides in some embodiments an NTN communication method, performed by a network device, including: sending an NTN system message to a UE.

In some embodiments of the present disclosure, the NTN communication method further includes: receiving capability information sent by the UE, in which the capability information indicates whether or not the UE supports to use the NTN system message in advance; and configuring a parameter in the NTN system message based on the capability information.

In some embodiments of the present disclosure, configuring the parameter in the NTN system message based on the capability information includes: in a case that the capability information indicates that the UE supports to use the NTN system message in advance, configuring validity durations of at least two NTN system messages to overlap with each other.

In a third aspect, the present disclosure provides in some embodiments an NTN communication apparatus, applied to a UE, including: a transceiver module configured to receive an NTN system message sent by a network device, and determine that uplink synchronization has been recovered in a case that a predetermined condition is met. The predetermined condition includes at least one of: that the UE uses the NTN system message; that the UE has received the NTN system message; or that the UE starts a synchronization validity timer.

In a fourth aspect, the present disclosure provides in some embodiments an NTN communication apparatus, applied to a network device, including: a transceiver module configured to send an NTN system message to a UE.

In a fifth aspect, the present disclosure provides in some embodiments a communication device, including a transceiver; a memory; and a processor coupled to the transceiver and the memory, respectively, and configured to execute computer-executable instructions in the memory to control the transceiver to receive and/or transmit a radio signal, and implement the NTN communication method in the embodiments of the first aspect or the second aspect.

In a sixth aspect, the present disclosure provides in some embodiments a computer storage medium storing therein computer-executable instructions. The computer-executable instructions are executed by a processor to implement the NTN communication method in the embodiments of the first aspect or the second aspect.

In a seventh aspect, the present disclosure provides in some embodiments a communication system, including a UE and a network device. The UE is configured to implement the NTN communication method in the embodiments of the first aspect, and the network device is configured to implement the NTN communication method in the embodiments of the second aspect.

According to the NTN communication method in the embodiments of the present disclosure, the UE receives the NTN system message sent by the network device, and in a case that the predetermined condition is met, determines that the uplink synchronization has been discovered. The predetermined condition includes at least one of: that the UE uses the NTN system message; that the UE has received the NTN system message; or that the UE starts the synchronization validity timer. In this way, it is able for the UE to determine an opportunity for indicating, by a radio resource control (RRC) layer, a lower layer that the uplink synchronization has been recovered in a case that the effective time point of the system message is a future time point.

The additional aspects and advantages of the present disclosure will be partially given or become apparent in the following description, or may be understood through the implementation of the present disclosure.

### BRIEF DESCRIPTION OF THE DRAWINGS

The above-mentioned and/or other aspects and advantages of the present disclosure may become apparent and easily understandable in the following description in conjunction with the drawings.
FIG. 1 is a schematic view showing timing synchronization according to an embodiment of the present disclosure;
FIG. 2 is a flow chart of an NTN communication method according to an embodiment of the present disclosure;
FIG. 3 is a flow chart of an NTN communication method according to an embodiment of the present disclosure;
FIG. 4 is a flow chart of an NTN communication method according to an embodiment of the present disclosure;
FIG. 5 is a flow chart of an NTN communication method according to an embodiment of the present disclosure;
FIG. 6 is a schematic view showing signaling interaction of an NTN communication method according to an embodiment of the present disclosure;
FIG. 7 is a block diagram of an NTN communication apparatus according to an embodiment of the present disclosure;
FIG. 8 is a block diagram of an NTN communication apparatus according to an embodiment of the present disclosure;
FIG. 9 is a block diagram of an NTN communication apparatus according to an embodiment of the present disclosure;
FIG. 10 is a schematic view showing a communication device according to an embodiment of the present disclosure; and
FIG. 11 is a schematic view showing a chip according to an embodiment of the present disclosure.

### DETAILED DESCRIPTION

The embodiments of the present disclosure will be described hereinafter in details, and examples are shown in the drawings. Identical or similar reference numbers represent an identical or similar element. The following embodiments described with reference to the drawings are for illustrative purposes only, but shall not be used to limit the scope of the present disclosure.

NTN communication is an important technology introduced in 5G, and a UE may access a core network via a satellite access network. A communication connection between the UE and a satellite is a service link, and a connection between the satellite and a ground receiving station is a feeder link. The ground receiving station is coupled to the core network so that the UE accesses the core network via the satellite access network. However, in NR NTN, as currently speculated in a protocol, upon the receipt of a system message, the UE notifies an MAC layer that uplink synchronization has been recovered. Currently, there is no scheme about an indication opportunity in a case that an effective time point of the system message is a future time point.

Based on the above, the present disclosure provides in some embodiments an NTN communication method, so as to solve the problem about the indication opportunity in the related art. In order to understand the inventive concept of the present disclosure in a better manner, TA will be described hereinafter at first.

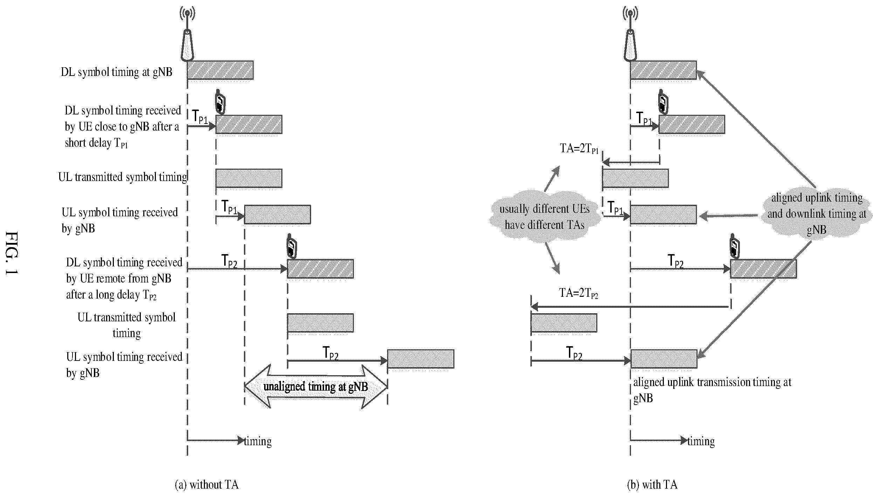

TA is an important concept in a 5G communication process, a 5G network is a synchronization network, and the UE needs to ensure synchronization between uplink and downlink. The UE receives a downlink synchronization signal sent by a base station to achieve the downlink synchronization. After the downlink synchronization, the UE needs to perform uplink synchronization to ensure that times when all uplink signals of the UE arrive at the base station are aligned with an uplink time. The uplink synchronization is achieved via initiating a random access procedure. To be specific, the UE sends a preamble to the base station, and the base station obtains a transmission delay between the UE and the base station via receiving the preamble. Then, the base station issues a TA command to the UE (a TA value is twice the transmission delay), and the UE performs uplink transmission in advance by a value indicated by TA to achieve the uplink synchronization. FIG. 1 is a schematic view showing timing synchronization.

A downlink signal sent by the base station may experience a unidirectional propagation delay before it arrives at the UE, so a downlink timing of the UE is delayed relative to the base station by one unidirectional propagation delay. In a case that the UE performs uplink transmission after its uplink timing is aligned with its downlink timing, the uplink signal may also experience a unidirectional propagation delay before it arrives at the base station. Hence, at the base station, the uplink timing is delayed relative to the downlink timing by one round-trip time (RTT), as shown in FIG. 1(a). The RTTs between different UEs and the base station are different, and the uplink timings of different UEs are not aligned with each other at the base station, so interference occurs among data sent by the UEs. In order to solve this problem, the base station sends a TA adjustment command to the UEs to advance the uplink timing of the UE by one RTT, so that the uplink timings of all the UEs arriving at the base station are aligned with each other, as shown in FIG. 1(b).

In addition to a common TA for which the UE needs to compensate, a network also broadcasts ephemeris information about the satellite to help the UE to obtain a position of the satellite and calculate the RTT between the UE and the satellite. Due to the mobility of the satellite, the common TA and the ephemeris information may change, so there is a validity duration for the ephemeris information and the command TA broadcast in a system message, which is called as UL synchronization validity duration. The ephemeris information and the common TA are carried in a system information block (SIB), and they share the same validity duration. A value of the validity duration is broadcast by the network to the UE, and the UE starts a UL synchronization validity timer based on a start effective time point (i.e., epoch time) of the validity duration corresponding to the ephemeris information and the common TA in the broadcast message.

For NR NTN, an NTN-related system message is broadcast via SIB19, and for LTENTN, the NTN-related system message is broadcast via SIB31. Taking NR NTN as an example, upon the receipt of SIB19, the UE starts a timer T430 (i.e., the UL synchronization validity timer) based on the epoch time indicated in SIB19. The epoch time may refer to a future time point, so whether or not the UE uses SIB 19 at a current time point in advance has not been determined yet. Taking NR NTN as an example, as speculated in a current protocol, upon the receipt of SIB19, the UE may notify the MAC layer that the uplink synchronization has been recovered. However, the epoch time may indicate a future time point, and the UE may probably not use SIB19, so the indication opportunity is defective.

It should be appreciated that, the scheme provided in the embodiments of the present disclosure may be applied to a satellite access network, especially an NTN, including, but not limited to, a 5G core network and a core network which supports a future communication technologies, e.g., LTE, 5G-advanced or sixth generation (6G), which is not limited herein.

It should be further appreciated that, the method provided in the embodiments of the present disclosure may be applied to an NTN communication system, e.g., a transparent transmission mode or a regeneration mode, which is not limited herein.

The NTN communication scheme provided in the embodiments of the present disclosure will be described hereinafter in details in conjunction with the drawings.

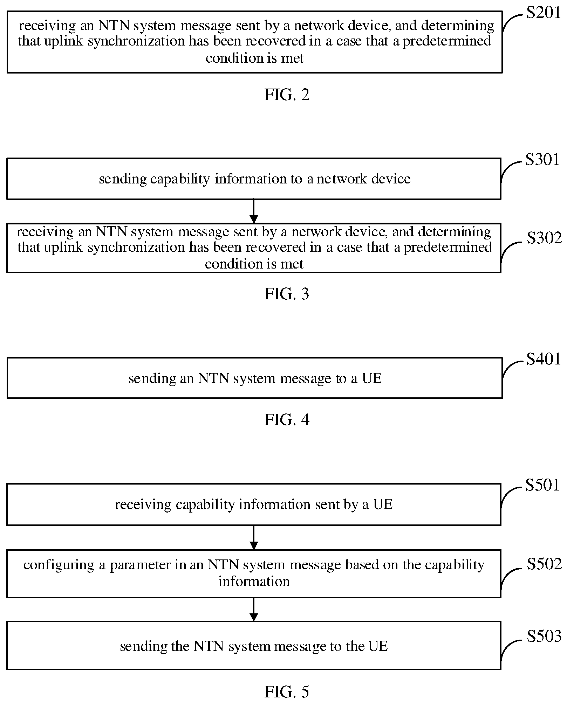

FIG. 2 is a flow chart of an NTN communication method according to an embodiment of the present disclosure, and the method is performed by a UE. The UE described in the embodiments of the present disclosure includes, but not limited to, a smart terminal device, a cellular phone, a wireless device, a handheld terminal device, a mobile unit, a vehicle, or a vehicle-mounted device, which is not limited herein.

As shown in FIG. 2, the method includes the following step.

S201: the UE receives an NTN system message sent by a network device, and determines that uplink synchronization has been recovered in a case that a predetermined condition is met.

In an embodiment of the present disclosure, the predetermined condition includes at least one of: that the UE uses the NTN system message; that the UE has received the NTN system message; or that the UE starts a synchronization validity timer.

It should be appreciated that, the expression determining that the uplink synchronization has been recovered in the embodiments of the present disclosure refers to that one layer of the UE indicates another layer of the UE, specifically a radio resource control (RRC) layer of the UE indicates lower layers of the UE, that the uplink synchronization has been recovered. The lower layer may be any one of a medium access control (MAC) layer, a radio link control (RLC) layer, or a packet data convergence protocol (PDCP) layer, which is not limited herein.

In an embodiment of the present disclosure, the NTN system message may be NR SIB19, or LTE SIB31/SIB31-NB, which is not limited herein.

In an embodiment of the present disclosure, the NTN system message includes satellite auxiliary information and/or TA information, and an effective time point of the NTN system message includes any time point. Especially, the effective time point of the NTN system message is a future time point, i.e., a time point after the UE has received the NTN system message.

In a word, according to the method in the embodiments of the present disclosure, the UE receives the NTN system message sent by the network device, and determines that the uplink synchronization has been recovered in a case that the predetermined condition is met. The predetermined condition includes at least one of: that the UE uses the NTN system message; that the UE has received the NTN system message; or that the UE starts the synchronization validity timer. Hence, it is able for the UE to determine an opportunity for indicating, by an RRC layer, a lower layer that the uplink synchronization has been recovered in a case that the effective time point of the system message is a future time point.

FIG. 3 is a flow chart of an NTN communication method according to an embodiment of the present disclosure, and the method is performed by a UE. Based on FIG. 2, the method in FIG. 3 includes the following steps.

S301: the UE sends capability information to a network device.

In an embodiment of the present disclosure, the capability information indicates whether or not the UE supports to use the NTN system message in advance. The UE reports its capability information to a base station, and the capability information indicates whether or not the UE supports to use SIB19/SIB31/SIB-31NB in advance.

For example, a value of the capability information is 1 or 0. In a case that the value of the capability information is 1, it indicates that the UE supports to use the NTN system message in advance, and in a case that the value of the capability information is 0, it indicates that the UE does not support to use the NTN system message in advance. For another example, the value of the capability information is 1, the capability information is sent to the network device in a case that the UE supports to use the NTN system message in advance, and the capability information is not sent to the network device in a case that the UE does not support to use the NTN system message in advance.

In an embodiment of the present disclosure, the capability information is used to assist the network device to configure a parameter in the NTN system message. For example, in a case that the network determines whether or not the UE supports to use SIB19 in advance, the capability information may assist the network to configure an ephemeris-related parameter and a common TA-related parameter of the UE in a connected state in a better manner, e.g., whether or not two validity durations configured for the ephemeris and common TA overlap with each other. For example, in a case that the network determines that the UE supports to use the NTN system message in advance, the network may configure for the UE that the validity durations of the system messages overlap with each other. In this case, there is no gap between the uses of the system messages, so as to prevent the occurrence of such a situation where there is no system message between the two validity durations, thereby to improve the communication performance.

In an embodiment of the present disclosure, the UE capability information is sent via an RRC message (UECapabilityInformation), which is not limited herein.

It should be appreciated that, S301 may be an optional step, which is not limited herein.

S302: the UE receives the NTN system message sent by the network device, and determines that uplink synchronization has been recovered in a case that a predetermined condition is met.

In an embodiment of the present disclosure, the predetermined condition includes at least one of: that the UE uses the NTN system message; that the UE has received the NTN system message; or that the UE starts a synchronization validity timer.

In an embodiment of the present disclosure, the above-mentioned three predetermined conditions will be described in details.

In an embodiment of the present disclosure, the NTN system message includes satellite auxiliary information and/or TA information. The satellite auxiliary information may be ephemeris information.

In an embodiment of the present disclosure, the UE using the NTN system message includes using at least part of information in the NTN system message, e.g., using the ephemeris information, or the TA information, or both.

It should be appreciated that, in the embodiments of the present disclosure, the NTN system message may be used in advance. In a case that an effective time point of the NTN system message is a time point after the UE has received the NTN system message and the UE supports to use the NTN system message in advance, the UE may use the NTN system message before a future time point. In other words, upon the receipt of the NTN system message, in a case that the effective time point of the NTN system message is a future time point after the UE has received the NTN system message, the UE may use information in a SIB in advance before the effective time point. The UE using the NTN system message includes using all of, or only a part of, parameters in the SIB.

To be specific, the UE may use the NTN system message in advance in the following two ways.
1) The UE calculates information to be used at a current time point based on information in the NTN system message.

For example, the UE determines satellite auxiliary information to be used between the current time point and the effective time point (the future time point) based on the satellite auxiliary information in the NTN system message, so as to use, before the future time point, the satellite auxiliary information to be used between the current time point and the future time point.

For another example, the UE determines TA information to be used between the current time point and the future time point based on the TA information in the NTN system message, so as to use, before the future time point, the TA information to be used between the current time point and the future time point.

2) The UE directly uses information in the NTN system message.

For example, the UE may directly, without any calculation, use the satellite auxiliary information and/or TA information in the NTN system message.

In an embodiment of the present disclosure, the UE may also use the NTN system message at the future time point.

In another embodiment of the present disclosure, in a case that the effective time point of the NTN system message is a time point after the UE has received the NTN system message and the UE supports to use the NTN system message in advance, upon the receipt of the NTN system message, an RRC layer of the UE indicates a lower layer that the uplink synchronization has been recovered. It should be appreciated that, the situation where the UE determines that the uplink synchronization has been recovered in a case that the UE has received the NTN system message may also be applied to the effective time point which is a time point before the UE has received the NTN system message, which will not be discussed herein.

In yet another embodiment of the present disclosure, in a case that the effective time point of the NTN system message is a time point after the UE has received the NTN system message and the UE does not support to use the NTN system message in advance, the RRC layer of the UE indicates the lower layer that the uplink synchronization has been recovered in a case that the UE starts the synchronization validity timer.

In a word, according to the method in the embodiments of the present disclosure, the UE receives the NTN system message sent by the network device, and determines that the uplink synchronization has been recovered in a case that the predetermined condition is met. The UE reports its capability information to the network to notify the network whether or not the UE supports to use the NTN system message in advance, so as to enable the network to configure the parameter in the system message in a better manner, thereby to improve the communication performance. In addition, it is able for the UE to determine an opportunity for indicating, by the RRC layer, the lower layer that the uplink synchronization has been recovered in a case that the effective time point of the system message is a future time point.

FIG. 4 is a flow chart of an NTN communication method according to an embodiment of the present disclosure, and the method is performed by a network device. As shown in FIG. 4, the method includes the following step.

S401: the network device sends an NTN system message to a UE.

In an embodiment of the present disclosure, the NTN system message is used to assist the UE to determine that uplink synchronization has been recovered in a case that a predetermined condition is met, i.e., assist an RRC layer of the UE to indicate an MAC layer, an RLC layer or a PDCP layer of the UE that the uplink synchronization has been recovered.

In an embodiment of the present disclosure, the predetermined condition includes at least one of: that the UE uses the NTN system message; that the UE has received the NTN system message; or that the UE starts a synchronization validity timer.

In an embodiment of the present disclosure, the NTN system message may be NR SIB19, or LTE SIB31/SIB31-NB, which is not limited herein.

In a word, according to the method in the embodiments of the present disclosure, the network device sends the NTN system message to the UE, and the NTN system message is used to assist the UE to determine that the uplink synchronization has been recovered in a case that the predetermined condition is met, so it is able for the UE to determine an opportunity for indicating, by the RRC layer, a lower layer that the uplink synchronization has been recovered in a case that an effective time point of the system message is a future time point.

FIG. 5 is a flow chart of an NTN communication method according to an embodiment of the present disclosure, and the method is performed by a network device. Based on FIG. 4, as shown in FIG. 5, the method includes the following steps.

S501: the network device receives capability information sent by a UE.

In an embodiment of the present disclosure, the capability information indicates whether or not the UE supports to use the NTN system message in advance. The UE reports its capability information to a base station, and the capability information indicates whether or not the UE supports to use SIB 19/SIB31/SIB-31NB in advance.

For example, a value of the capability information is 1 or 0. In a case that the value of the capability information is 1, it indicates that the UE supports to use the NTN system message in advance, and in a case that the value of the capability information is 0, it indicates that the UE does not support to use the NTN system message in advance. For another example, the value of the capability information is 1, the capability information is sent to the network device in a case that the UE supports to use the NTN system message in advance, and the capability information is not sent to the network device in a case that the UE does not support to use the NTN system message in advance.

In an embodiment of the present disclosure, the UE capability information is sent via an RRC message (UECapabilityInformation), which is not limited herein.

S502: the network device configures a parameter in the NTN system message based on the capability information.

In an embodiment of the present disclosure, the capability information is used to assist the network device to configure the parameter in the NTN system message. To be specific, in a case that the capability information indicates that the UE supports to use the NTN system message in advance, the network device configures validity durations of at least two NTN system messages to overlap with each other.

For example, in a case that the network determines whether or not the UE supports to use SIB19 in advance, the capability information may assist the network to configure an ephemeris-related parameter and a common TA-related parameter of the UE in a connected state in a better manner, e.g., whether or not two validity durations configured for the ephemeris and common TA overlap with each other. For example, in a case that the network determines that the UE supports to use the NTN system message in advance, the network may configure for the UE that the validity durations of the system messages overlap with each other. In this case, there is no gap between the uses of the system messages, so as to prevent the occurrence of such a situation where there is no system message between the two validity durations, thereby to improve the communication performance.

In an embodiment of the present disclosure, a start time point of the validity duration is the effective time point described in the above-mentioned embodiments.

It should be appreciated that, S501 and S502 may be optional steps, which is not limited herein.

S503: the network device sends the NTN system message to the UE.

In an embodiment of the present disclosure, the network device sends the configured NTN system message to the UE to assist the UE to determine that the uplink synchronization has been recovered in a case that the predetermined condition is met. The specific implementation may refer to the embodiments for the UE in FIGS. 2 and 3, and details will not be described herein again.

In a word, according to the method in the embodiments of the present disclosure, the network device receives the capability information reported by the UE to determine whether or not the UE supports to use the NTN system message in advance, so as to configure the parameter in the NTN system message in a better manner, thereby to improve the communication performance. The network device sends the configured NTN system message to the UE to assist the UE to determine that the uplink synchronization has been recovered in a case that the predetermined condition is met. In this way, it is able for the UE to determine an opportunity for indicating, by the RRC layer, the lower layer that the uplink synchronization has been recovered in a case that the effective time point of the system message is a future time point.

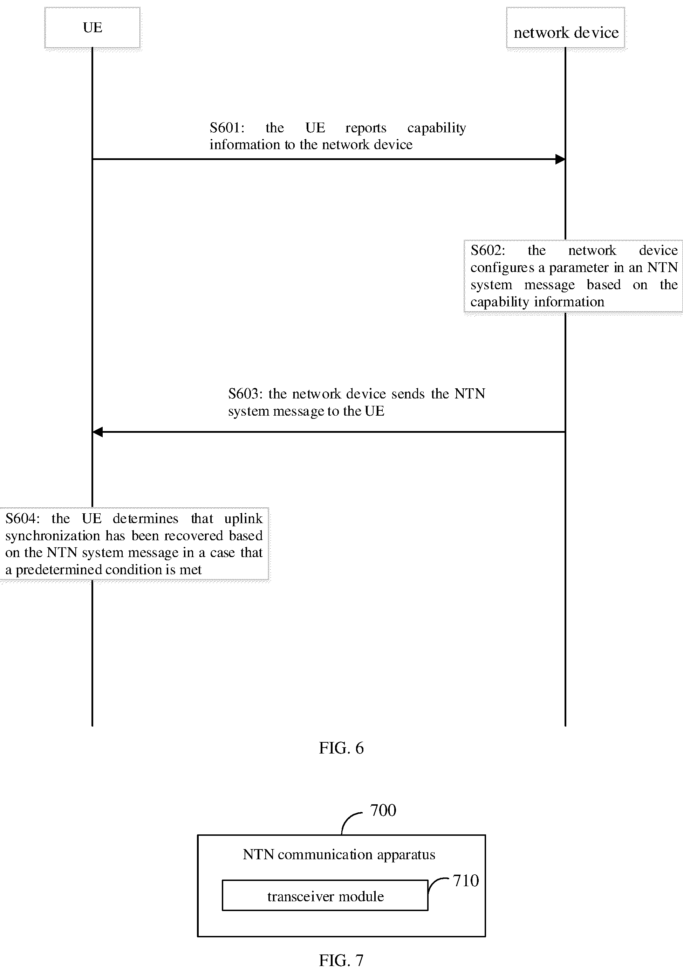

FIG. 6 is a schematic view showing interaction of an NTN communication method according to an embodiment of the present disclosure, and the method is applied to a communication system including a UE and a network device. As shown in FIG. 6, the method includes the following steps.

S601: the UE reports capability information to the network device.

In an embodiment of the present disclosure, the UE capability information is used to indicate whether or not the UE supports to use an NTN system message in advance.

S602: the network device configures a parameter in the NTN system message based on the UE capability information.

The network device configures an ephemeris-related parameter and a common TA-related parameter of the UE in a connected state in a better manner based on whether or not the UE supports to use the NTN system message in advance, e.g., whether or not two validity durations configured for the ephemeris and common TA overlap with each other.

It should be appreciated that, S601 and S602 may be optional steps.

S603: the network device sends the NTN system message to the UE.

The network device may send the NTN system message to the UE, and the NTN system message includes satellite auxiliary information and/or TA information. The NTN system message may be configured by the network device based on the UE capability information, or configured without taking the UE capability information into consideration, which is not limited herein.

S604: the UE determines that uplink synchronization has been recovered based on the NTN system message in a case that a predetermined condition is met.

An RRC layer of the UE may indicate a lower layer that the uplink synchronization has been recovered based on a parameter in the NTN system message in a case that the predetermined condition is met. The specific implementation may refer to the embodiments in FIGS. 2 to 5, and details will not be described herein again.

In a word, according to the method in the embodiments of the present disclosure, the network device receives the capability information reported by the UE to determine whether or not the UE supports to use the NTN system message in advance, so as to configure the parameter in the NTN system message in a better manner, thereby to improve the communication performance. The network device sends the configured NTN system message to the UE, so as to assist the UE to determine that the uplink synchronization has been recovered in a case that the predetermined condition is met. In this way, it is able for the UE to determine an opportunity for indicating, by the RRC layer, the lower layer that the uplink synchronization has been recovered in a case that the effective time point of the system message is a future time point.

In the above embodiments of the present disclosure, the methods have been described from both the UE side and the network device side. In order to achieve various functions in the methods provided in the embodiments of the present disclosure, each of the network device and the UE includes a hardware structure and a software module, i.e., the functions are achieved in the form of the hardware structure, the software module, or a combination thereof. A certain function in these functions is executed via the hardware structure, the software module, or a combination thereof.

Corresponding to the NTN communication method provided in the above-mentioned embodiments, the present disclosure further provides in some embodiments an NTN communication apparatus. The NTN communication apparatus corresponds to the NTN communication method provided in the above-mentioned embodiments, so the implementation of the NTN communication method may also be applied to the NTN communication apparatus, and thus will not be described in detail in this embodiment.

FIG. 7 is a schematic view showing an NTN communication apparatus 700 according to an embodiment of the present disclosure, and the NTN communication apparatus 700 is applied to a UE.

As shown in FIG. 7, the NTN communication apparatus 700 includes a transceiver module 710. The transceiver module 710 is configured to receive an NTN system message sent by a network device, and determine that uplink synchronization has been recovered in a case that a predetermined condition is met. The predetermined condition includes at least one of: that the UE uses the NTN system message; that the UE has received the NTN system message; or that the UE starts a synchronization validity timer.

According to the NTN communication apparatus in the embodiments of the present disclosure, the UE receives the NTN system message sent by the network device, and in a case that the predetermined condition is met, determines that the uplink synchronization has been discovered. The predetermined condition includes at least one of: that the UE uses the NTN system message; that the UE has received the NTN system message; or that the UE starts the synchronization validity timer. In this way, it is able for the UE to determine an opportunity for indicating, by an RRC layer, a lower layer that the uplink synchronization has been recovered in a case that an effective time point of the system message is a future time point.

In some embodiments of the present disclosure, the NTN system message includes satellite auxiliary information and/or TA information, and the UE using the NTN system message includes using at least part of information in the NTN system message.

In some embodiments of the present disclosure, the transceiver module 710 is specifically configured to, in a case that an effective time point of the NTN system message is a time point after the UE has received the NTN system message and the UE supports to use the NTN system message in advance, determine that the uplink synchronization has been recovered in a case that the UE has received the NTN system message.

In some embodiments of the present disclosure, in a case that the effective time point of the NTN system message is a time point after the UE has received the NTN system message and the UE supports to use the NTN system message in advance, the transceiver module 710 is further configured to: determine satellite auxiliary information to be used between a current time point and the effective time point based on the satellite auxiliary information in the NTN system message, and use the satellite auxiliary information to be used between the current time point and the effective time point; determine TA information to be used between the current time point and the effective time point based on the TA information in the NTN system message, and use the TA information to be used between the current time point and the effective time point; or use the satellite auxiliary information and/or the TA information in the NTN system message.

In some embodiments of the present disclosure, in a case that the effective time point of the NTN system message is a time point after the UE has received the NTN system message and the UE supports to use the NTN system message in advance, the transceiver module 710 is further configured to use the NTN system message before the effective time point, or use the NTN system message at the effective time point.

In some embodiments of the present disclosure, the transceiver module 710 is specifically configured to, in a case that the effective time point of the NTN system message is a time point after the UE has received the NTN system message and the UE does not support to use the NTN system message in advance, determine that the uplink synchronization has been recovered in a case that the UE starts the synchronization validity timer.

In some embodiments of the present disclosure, the transceiver module 710 is further configured to send capability information to the network device, the capability information indicates whether or not the UE supports to use the NTN system message in advance, and the capability information is used to assist the network device to configure a parameter in the NTN system message.

In a word, according to the NTN communication apparatus in the embodiments of the present disclosure, the UE receives the NTN system message sent by the network device, and determines that the uplink synchronization has been recovered in a case that the predetermined condition is met. The UE reports its capability information to the network to notify the network whether or not the UE supports to use the NTN system message in advance, so as to enable the network to configure the parameter in the system message in a better manner, thereby to improve the communication performance.

In addition, it is able for the UE to determine an opportunity for indicating, by an RRC layer, a lower layer that the uplink synchronization has been recovered in a case that the effective time point of the system message is a future time point.

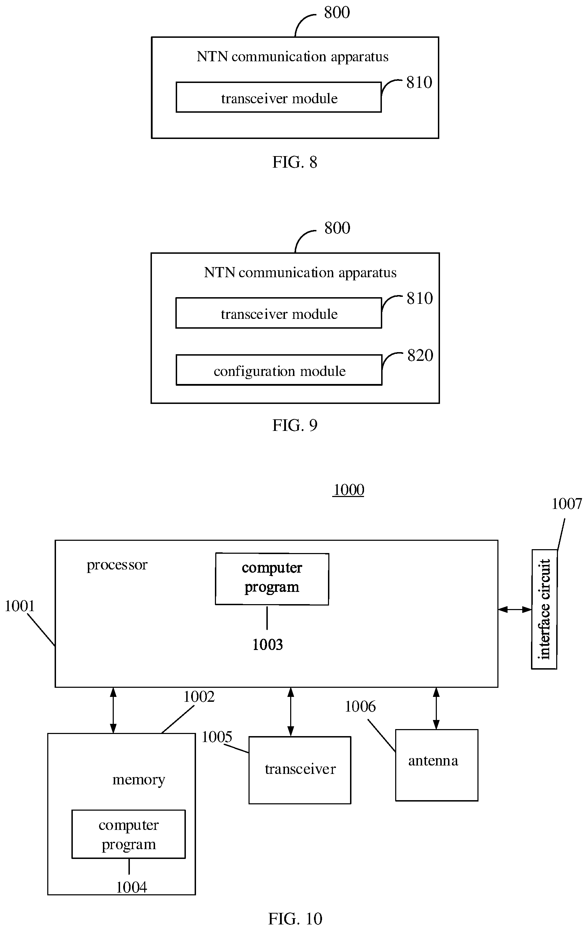

FIG. 8 is a schematic view showing an NTN communication apparatus 800 according to an embodiment of the present disclosure, and the NTN communication apparatus 800 is applied to a network device.

As shown in FIG. 8, the NTN communication apparatus 800 includes a transceiver module. The transceiver module 810 is configured to send an NTN system message to a UE.

According to the NTN communication apparatus in the embodiments of the present disclosure, the network device sends the NTN system message to the UE, so it is able for the UE to determine an opportunity for indicating, by an RRC layer, a lower layer that the uplink synchronization has been recovered in a case that an effective time point of the system message is a future time point.

In some embodiments of the present disclosure, the transceiver module 810 is further configured to receive capability information sent by the UE, and the capability information indicates whether or not the UE supports to use the NTN system message in advance.

In some embodiments of the present disclosure, as shown in FIG. 9, the NTN communication apparatus 800 further includes a configuration module 820 configured to configure a parameter in the NTN system message based on the capability information.

In a word, according to the NTN communication apparatus in the embodiments of the present disclosure, the network device receives the capability information reported by the UE to determine whether or not the UE supports to use the NTN system message in advance, so as to configure the parameter in the NTN system message in a better manner, thereby to improve the communication performance. The network device sends the configured NTN system message to the UE to assist the UE to determine that the uplink synchronization has been recovered in a case that the predetermined condition is met. In this way, it is able for the UE to determine an opportunity for indicating, by an RRC layer, a lower layer that the uplink synchronization has been recovered in a case that the effective time point of the system message is a future time point.

The present disclosure further provides in some embodiments a communication system, which includes a UE and a network device. The UE reports capability information to the network device, the network device configures a parameter in an NTN system message based on the capability information and sends the NTN system message to the UE, and the UE determines that uplink synchronization has been recovered based on the NTN system message in a case that a predetermined condition is met.

In a word, according to the NTN communication apparatus in the embodiments of the present disclosure, the network device receives the capability information reported by the UE to determine whether or not the UE supports to use the NTN system message in advance, so as to configure the parameter in the NTN system message in a better manner, thereby to improve the communication performance. The network device sends the configured NTN system message to the UE to assist the UE to determine that the uplink synchronization has been recovered in a case that the predetermined condition is met. In this way, it is able for the UE to determine an opportunity for indicating, by an RRC layer, a lower layer that the uplink synchronization has been recovered in a case that the effective time point of the system message is a future time point.

FIG. 10 is a schematic view showing a communication device 1000 according to an embodiment of the present disclosure. The communication device 1000 may be a network device, or a UE, or a chip, a chip system or a processor which supports the network device to achieve the above-mentioned method, or a chip, a chip system or a processor which supports the UE to achieve the above-mentioned method. The communication device is used to achieve the above-mentioned methods, and for details, reference is made to the foregoing method embodiments.

The communication device 1000 may include one or more processors 1001. The processor 1001 may be a general-purpose processor or special-purpose processor, e.g., a baseband processor or a central processing unit. The baseband processor is configured to process a communication protocol as well as communication data, and the central processing unit is configured to control the communication apparatus (e.g., a base station, a baseband chip, a terminal device, a terminal device chip, a Distributed Unit (DU) or a Centralized Unit (CU)), execute a computer program, and process data in the computer program.

Optionally, the communication device 1000 further includes one or more memories 1002 storing therein a computer program 1004. The computer program 1004 is executed by the processor 1001, so that the communication device 1000 implements the above-mentioned method. Optionally, the memory 1002 further stores therein data. The communication device 1000 is arranged independent of, or integrated with, the memory 1002.

Optionally, the communication device 1000 further includes a transceiver 1005 and an antenna 1006. The transceiver 1005 is also called as a transceiver unit, a transceiver machine or a transceiver circuit, and it is configured to achieve a transmission function and a reception function. The transceiver 1005 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication device 1000 further includes one or more interface circuits 1007. The interface circuit 1007 is configured to receive a code instruction and transmit it to the processor 1001. The processor 1001 executes the code instruction, so that the communication device 1000 implements the above-mentioned method.

In an embodiment of the present disclosure, the processor 1001 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In an embodiment of the present disclosure, the processor 1001 stores therein a computer program 1003, and the computer program 1003 is executed by the processor 1001, so that the communication device 1000 implements the above-mentioned method. The computer program 1003 may be programmed in the processor 1001, and in this case, the processor 1001 may be implemented via hardware.

In an embodiment of the present disclosure, the communication device 1000 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device mentioned hereinabove may be a network device or a UE, but the scope of the communication device is not limited thereto. In addition, a structure of the communication device is not limited to that in FIG. 10. The communication device may be an independent device, or a part of a large device. For example, the communication device may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

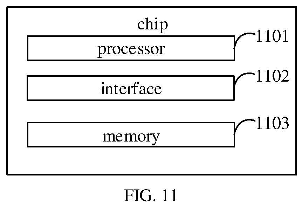

In a case that the communication device is a chip or a chip system, FIG. 11 is a block diagram of the chip according to an embodiment of the present disclosure. As shown in FIG. 11, the chip includes a processor 1101 and an interface 1102. There may exist one or more processors 1101, and more than one interface 1102.

Optionally, the chip further includes a memory 1103 for storing therein necessary computer programs and data.

It should be appreciated that, various illustrative logical blocks and steps listed in the embodiments of the present disclosure may be implemented by electronic hardware, computer software, or a combination thereof. Whether these functions are implemented by hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein an instruction. The instruction is executed by a computer to achieve the functions in any of the above method embodiments.

The present disclosure further provides in some embodiments a computer program product. The computer program product is executed by a computer to achieve the functions in any of the above method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which is not limited herein. In the embodiments of the present disclosure, for technical features of the same kind, the words "first", "second", "third", "A", "B", "C" and "D" are used to differentiate these technical features, without indicating any sequence or sizes thereof.

As used herein, the terms "machine-readable medium" and "computer-readable medium" refer to any computer program product, device and/or apparatus for providing a machine instruction and/or data to a programmable processor (e.g., magnetic disc, optical disc, memory, programmable logic device (PLD)), which includes the machine-readable medium for receiving the machine instruction as a machine-readable signal. The term "machine-readable signal" refers to any signal for providing the machine instruction and/or data to the programmable processor.

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user may interact with an implementation of the system and technique), or any combination of such back-end, middleware, or front-end components. The components of the system may be interconnected by any form or medium of digital data communication (e.g., a communication network). Examples of communication networks include a local area network (LAN), a wide area network (WAN) and the Internet.

The computer system may include a client and a server. The client and server are generally remote from each other and typically interact via a communication network. A relationship of client and server arises by virtue of computer programs running on respective computers and having a client-server relationship to each other.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, which is not limited herein.

In addition, it should be further appreciated that each embodiment of the present disclosure may be implemented separately, or implemented in combination with other embodiments if appropriate.

It should be appreciated that, units and algorithm steps described in the embodiments of the present disclosure are implemented in the form of electronic hardware, or a combination of a computer program and the electronic hardware. Whether or not these functions are executed by hardware or software depends on specific applications or design constraints of the technical solution. Different methods are adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and details will not be described herein again.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A non-terrestrial network (NTN) communication method, performed by a user equipment (UE), comprising:
receiving an NTN system message sent by a network device, and determining that uplink synchronization has been recovered in a case that a predetermined condition is met,
wherein the predetermined condition comprises at least one of:
that the UE uses the NTN system message;
that the UE has received the NTN system message; or
that the UE starts a synchronization validity timer.

2. The method according to claim 1, wherein the NTN system message comprises satellite auxiliary information and/or timing advance (TA) information, and the UE using the NTN system message comprises using at least part of information in the NTN system message.

3. The method according to claim 1 or 2, wherein determining that the uplink synchronization has been recovered in a case that the UE has received the NTN system message comprises:
in a case that an effective time point of the NTN system message is a time point after the UE has received the NTN system message and the UE supports to use the NTN system message in advance, determining that the uplink synchronization has been recovered in a case that the UE has received the NTN system message.

4. The method according to any one of claims 1 to 3, wherein in a case that an effective time point of the NTN system message is a time point after the UE has received the NTN system message and the UE supports to use the NTN system message in advance, the UE using the NTN system message comprises at least one of:
determining satellite auxiliary information to be used between a current time point and the effective time point based on the satellite auxiliary information in the NTN system message, and using the satellite auxiliary information to be used between the current time point and the effective time point;
determining TA information to be used between the current time point and the effective time point based on the TA information in the NTN system message, and using the TA information to be used between the current time point and the effective time point; or
using the satellite auxiliary information and/or the TA information in the NTN system message.

5. The method according to any one of claims 1 to 4, wherein in a case that an effective time point of the NTN system message is a time point after the UE has received the NTN system message and the UE supports to use the NTN system message in advance, the UE using the NTN system message comprises:
using the NTN system message before the effective time point, or using the NTN system message at the effective time point.

6. The method according to any one of claims 1 to 5, wherein determining that the uplink synchronization has been recovered in a case that the UE starts the synchronization validity timer comprises:
in a case that an effective time point of the NTN system message is a time point after the UE has received the NTN system message and the UE does not support to use the NTN system message in advance, determining that the uplink synchronization has been recovered in a case that the UE starts the synchronization validity timer.

7. The method according to any one of claims 1 to 6, further comprising:
sending capability information to the network device, wherein the capability information indicates whether or not the UE supports to use the NTN system message in advance, and the capability information is used to assist the network device to configure a parameter in the NTN system message.

8. A non-terrestrial network (NTN) communication method, performed by a network device, comprising:
sending an NTN system message to a user equipment (UE).

9. The method according to claim 8, further comprising:
receiving capability information sent by the UE, wherein the capability information indicates whether or not the UE supports to use the NTN system message in advance; and
configuring a parameter in the NTN system message based on the capability information.

10. The method according to claim 9, wherein configuring the parameter in the NTN system message based on the capability information comprises:
in a case that the capability information indicates that the UE supports to use the NTN system message in advance, configuring validity durations of at least two NTN system messages to overlap with each other.

11. A non-terrestrial network (NTN) communication apparatus, comprising:
a transceiver module configured to receive an NTN system message sent by a network device, and determine that uplink synchronization has been recovered in a case that a predetermined condition is met,
wherein the predetermined condition comprises at least one of:
that the UE uses the NTN system message;
that the UE has received the NTN system message; or
that the UE starts a synchronization validity timer.

12. A non-terrestrial network (NTN) communication apparatus, comprising:
a transceiver module configured to send an NTN system message to a user equipment (UE).

13. A communication device, comprising:
a transceiver;
a memory; and
a processor coupled to the transceiver and the memory, respectively, and configured to execute computer-executable instructions in the memory to control the transceiver to receive and/or transmit a radio signal, and implement the method according to any one of claims 1 to 10.

14. A computer-readable storage medium storing therein computer-executable instructions, wherein the computer executable instructions are executed by a processor to implement the method according to any one of claims 1 to 10.

15. A communication system, comprising:
a UE configured to implement the method according to any one of claims 1 to 7; and
a network device configured to implement the method according to any one of claims 8 to 10.
